# EUROPÄISCHE PATENTSCHRIFT

(11) **EP 1 138 427 B1**
(45) Veröffentlichungstag und Bekanntmachung des Hinweises auf die Patenterteilung: **14.12.2005**
(21) Anmeldenummer: 01810266.5
(22) Anmeldetag: 19.03.2001
(51) Int. Cl.: B23D 61/18, F16G 11/00, F16G 11/08

(54) **Gelenkverschluss für Sägeseil**
Hinged coupling device for saw wire
Dispositif de couplage de fil de sciage

(30) Priorität: 27.03.2000 DE 10015182
(43) Veröffentlichungstag der Anmeldung: 04.10.2001
(73) Patentinhaber: HILTI Aktiengesellschaft, 9494 Schaan (LI)
(72) Erfinder: Spangenberg, Rolf, 82131 Gauting (DE); Plattner, Josef, 6200 Gallzein (AT)
(74) Vertreter: Wildi, Roland

(56) Entgegenhaltungen:
- EP-B- 0 680 395
- US-A- 2 687 024
- US-A- 5 496 219

## Beschreibung

Die Erfindung betrifft einen Gelenkverschluss für ein Sägeseil gemäss dem Oberbegriff des Patentanspruchs 1 (siehe auch EP-680 395 B1).

Dem Schneiden von Naturstein, Mauerwerk, Beton mit Bewehrung und dergleichen oder für die Bearbeitung feinster Konturen dienen Sägeseile, die in Seilsägen verwendet werden. Der Führung der Sägeseile in und ausserhalb der Seilsägen dienen Umlenk- und Führungsrollen, die eine auf das Sägeseil abgestimmte Aussenkontur aufweisen. Das Sägeseil setzt sich aus einem Stahlseil, mehreren auf dem Seil verteilt angeordneten, aus Diamant-Schneidkom gebildeten Schneidperlen und einem Gelenkverschluss zusammen, der beide freien Enden des Seiles miteinander verbindet. Sägeseile, deren Schneidkanten eine kreisrunde Aussenkontur aufweisen, neigen bei der Bearbeitung eines Untergrundes zu einem Verdrehen des gesamten Sägeseiles, um dessen Längsachse. Dieses Verdrehen des Sägeseiles hat den grossen Vorteil, dass sich die Aussenkontur der Schneidperlen im wesentlichen gleichmässig abnützt. Damit das Sägeseil auch im Bereich des Gelenkverschlusses gut und sicher um die Umlenkrollen herumgeführt werden kann, weist der Gelenkverschluss beispielsweise zwei Gelenkteile mit zwei einander unter einem Winkel von 90° kreuzenden Gelenkachsen auf. Dank der beiden Gelenkachsen können beide Gelenkteile, jeweils bei einer Verdrehung des Sägeseiles um 90°, gegenseitig verschwenkt werden. Ein derartiges Sägeseil ist beispielsweise aus der EP-680395B1 bekannt.

Jedes der beiden Gelenkteile hat einen gabelartigen Aufnahmebereich mit zwei Wangen und weist einen Aufnahmebereich mit einer Aufnahmebuchse auf, der mit einem freien Ende des Sägeseiles fest verbindbar ist. Mit Hilfe eines zwischen die Wangen beider Gelenkteile ragenden Zwischenstückes und zweier Gelenkbolzen, die jeweils zwei Wangen eines Gelenkteiles und jeweils eine Bohrung im Zwischenstück durchsetzen, werden die beiden Gelenkachsen gebildet. Aufgrund der beiden, in Bezug auf die Längserstreckung des Gelenkverschlusses, hintereinander angeordneten Gelenkachsen weist dieser bekannte Gelenkverschluss eine grosse Baulänge auf. Ausserdem setzt sich dieser Gelenkverschluss aus einer Vielzahl von Bauteilen zusammen, die in ihrer Gesamtheit ein sehr hohes Gewicht ergeben.

Aus der US 2,687,024 A ist ein Kugelgelenk für ein Gestänge bekannt, so dass eine an einem Ende des Gestänges festgelegte Saugpumpe auch in ein nicht-linear verlaufendes Bohrloch einführbar ist. Das Kugelgelenk weist als erstes Gelenkteil eine zweiteilige Kugelpfanne, welche die Kugel des zweiten Gelenkteils bis auf eine Schwenköffnung weitgehend umgreift. Durch das Zentrum der Kugel verlaufend ist eine Durchtrittsöffnung für einen Gelenkbolzen vorgesehen, die im Bereich des Aussenumfangs der Kugel einen den Durchmesser des Gelenkbolzens übersteigenden Durchmesser aufweist.

Der Erfindung liegt die Aufgabe zugrunde, einen Gelenkverschluss für ein Sägeseil zu schaffen, der sich durch eine kurze Bauweise und durch ein geringes Gewicht auszeichnet. Der Gelenkverschluss soll weiters wirtschaftlich herstellbar sein und eine sichere Verbindung der beiden Sägeseilenden gewährleisten.

Die Lösung dieser Aufgaben erfolgt mit einem Gelenkverschluss, welcher die im kennzeichnenden Abschnitt des Patentanspruchs 1 angeführten Merkmale aufweist.

Der erfindungsgemässe Gelenkverschluss weist zwei Gelenkteile auf, die mit einem Gelenkbolzen gelenkartig miteinander verbunden sind. Jedes der beiden Gelenkteile weist einen Aufnahmebereich mit einer Aufnahmebuchse auf, der mit einem freien Ende des Sägeseiles fest verbindbar ist. Beide Gelenkteile sind um zwei Gelenkachsen bzw. in zwei Ebenen gegenseitig verschwenkbar, die unter einem Winkel von 90° zueinander angeordnet sind. Eine erste Gelenkachse wird von der Längsachse des Gelenkbolzens gebildet. Beide Gelenkteile sind somit in einer ersten Ebene gegenseitig verschwenkbar die senkrecht zur Längsachse des Gelenkbolzens angeordnet ist. Durch die spezielle Ausgestaltung der Durchtrittsöffnung kann der Verbindungsbereich und somit das zweite Gelenkteil gegenüber dem Gelenkbolzen des ersten Gelenkteils in einer zweiten Ebene verschwenkt werden, in der die Längsachse des Gelenkbolzens liegt.

Aufgrund der erfindungsgemässen Ausgestaltung des zweiten Gelenkteiles wird eine sehr kurze Baulänge des gesamten Gelenkverschlusses erreicht. Der Gelenkverschluss selbst ist wirtschaftlich herstellbar und weist ein geringes Gewicht auf, da er nur aus sehr wenigen, einfach aufgebauten Bauteilen besteht.

Um ein gutes Verschwenken des zweiten Gelenkteiles gegenüber dem ersten Gelenkteil in einer Ebene erreichen zu können, in der die Längsachse des Gelenkbolzens liegt, verringert sich vorzugsweise ein parallel zur Längsachse der Durchtrittsöffnung im zweiten Gelenkteil erstreckender Abstand der beiden Seitenflächen voneinander zu einem Aufnahmebereich des zweiten Gelenkteiles und/oder zum freien Ende des Verbindungsbereiches hin. Der grösste Abstand der beiden Seitenflächen voneinander entspricht dabei zweckmässigerweise einer lichten Weite, die sich zwischen zwei Wandflächen erstreckt, die von zwei voneinander beabstandeten Wangen des ersten Gelenkteiles gebildet werden.

Eine gute Anlage und Führung des Sägeseiles an der Aussenkontur der Umlenkrollen wird vorteilhafterweise dadurch erreicht, indem die Seitenflächen oder Abschnitte der Seitenflächen zueinander unter einem Winkel von 5° bis 15° angeordnet sind. In Bezug auf eine Längsachse des zweiten Gelenkteiles ist der Winkel, unter dem die Seitenflächen angeordnet sind, auf beiden Seiten gleich. Es ist beispielsweise auch möglich, die Seitenflächen unter verschiedenen Winkeln gegenüber der Längsachse des zweiten Gelenkteiles anzuordnen.

Damit sich die beiden Gelenkteile des Gelenkverschlusses an die, der Führung des Sägeseiles dienende, Aussenkontur der Umlenkrollen anpassen kann, sind die beiden Gelenkteile in Umfangsrichtung gegenseitig leicht verdrehbar. Diese Verdrehbarkeit wird erreicht, indem zweckmässigerweise der Abstand der beiden Seitenflächen voneinander in einer senkrecht zu den Längsachsen der Durchtrittsöffnung und des Aufnahmebereiches verlaufenden Richtung zur Aussenkontur des zweiten Gelenkteiles hin abnimmt.

Vorteilhafterweise vergrössert sich die lichte Weite zwischen den Wandflächen der beiden Wangen zu einem Aufnahmebereich des ersten Gelenkteiles und/oder zum freien Ende des gabelartig ausgebildeten Bereiches hin. Dadurch wird ebenfalls ein gutes Verschwenken des zweiten Gelenkteiles gegenüber dem ersten Gelenkteil in einer Ebene erreicht, in der die Längsachse des Gelenkbolzens liegt. Bei dieser erfindungsgemässen Ausgestaltung der beiden Wandflächen erübrigen sich geneigte Seitenflächen am Verbindungsbereich des zweiten Gelenkteiles. Diese können infolgedessen in der Weise ausgebildet sein, dass diese voneinander einen gleichbleibenden Abstand haben.

Von der Neigung der Wandflächen gegenüber der Längsachse des zweiten Gelenkteiles hängt jener Winkel ab, um den das zweite Gelenkteil gegenüber dem ersten Gelenkteil in einer Ebene schwenkbar ist, in der sich die Längsachse des Gelenkbolzens befindet. Vorzugsweise sind die Wandflächen oder Abschnitte der Wandflächen zueinander unter einem Winkel von 5° bis 20° angeordnet.

Damit sich die beiden Gelenkteile des Gelenkverschlusses an die, der Führung des Sägeseiles dienende Aussenkontur der Umlenkrollen anpassen kann, sind die beiden Gelenkteile in Umfangsrichtung gegenseitig leicht verdrehbar. Diese Verdrehbarkeit wird erreicht, indem sich vorzugsweise die lichte Weite zwischen den beiden Wandflächen der beiden Wangen, in einer senkrecht zu den Längsachsen der Bohrung und des Aufnahmebereiches verlaufenden Richtung zur Aussenkontur des ersten Gelenkteiles hin vergrössert.

Eine zusätzliche Verbesserung der Beweglichkeit des Verbindungsbereiches des zweiten Gelenkteiles gegenüber dem Gelenkbolzen wird dadurch erreicht, dass sich vorzugsweise ein Durchmesser der Durchtrittsöffnung zu beiden Seitenflächen hin vergrössert.

Der grösste Abstand zwischen beiden Seitenflächen des Verbindungsbereiches entspricht beispielsweise der kleinsten lichten Weite zwischen beiden Wangen.

Die Erfindung wird anhand von Zeichnungen, die zwei Ausführungsbeispiele wiedergeben, näher erläutert. Es zeigen:
- Fig.1: einen erfindungsgemässen, mit einem Sägeseil in Verbindung stehenden Gelenkverschluss, mit zwei Gelenkteilen und einem Gelenkbolzen in Seitenansicht;
- Fig. 2: den Gelenkverschluss gemäss Fig. 1 in einer Draufsicht;
- Fig. 3: die beiden Gelenkteile des Gelenkverschlusses gemäss Fig. 1 und 2, ohne Sägeseil und ohne Gelenkbolzen;
- Fig. 4: einen weiteren erfindungsgemässen, mit einem Sägeseil in Verbindung stehenden Gelenkverschluss, mit zwei Gelenkteilen und einem Gelenkbolzen in Seitenansicht;
- Fig. 5: den Gelenkverschluss gemäss Fig. 4 in einer Draufsicht;
- Fig. 6: die beiden Gelenkteile des Gelenkverschlusses gemäss Fig. 4 und 5, ohne Sägeseil und ohne Gelenkbolzen.

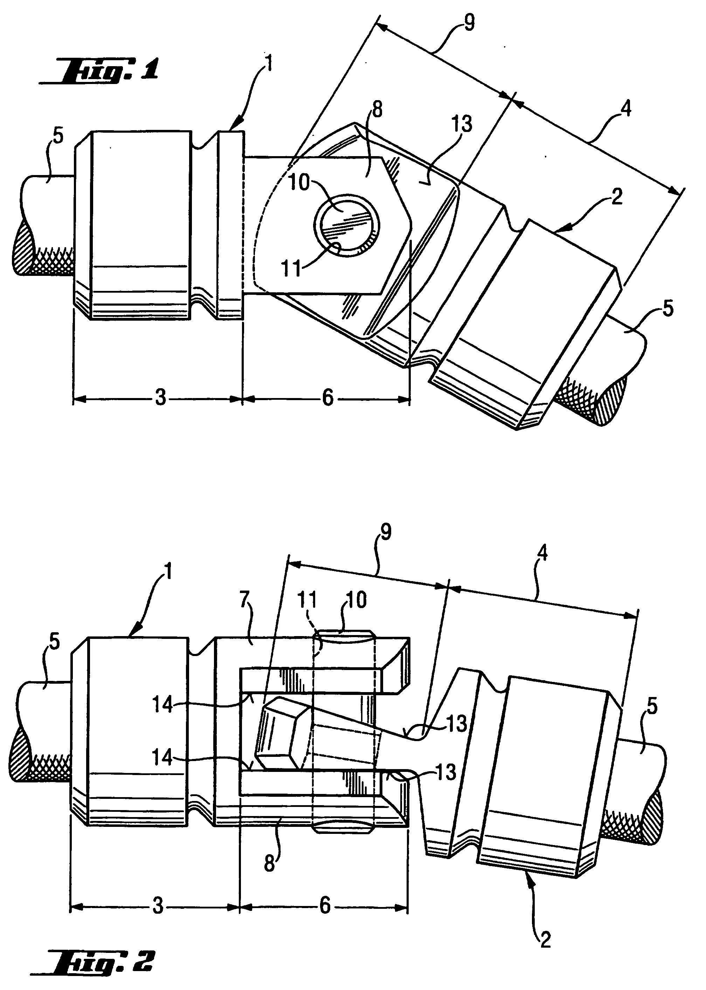

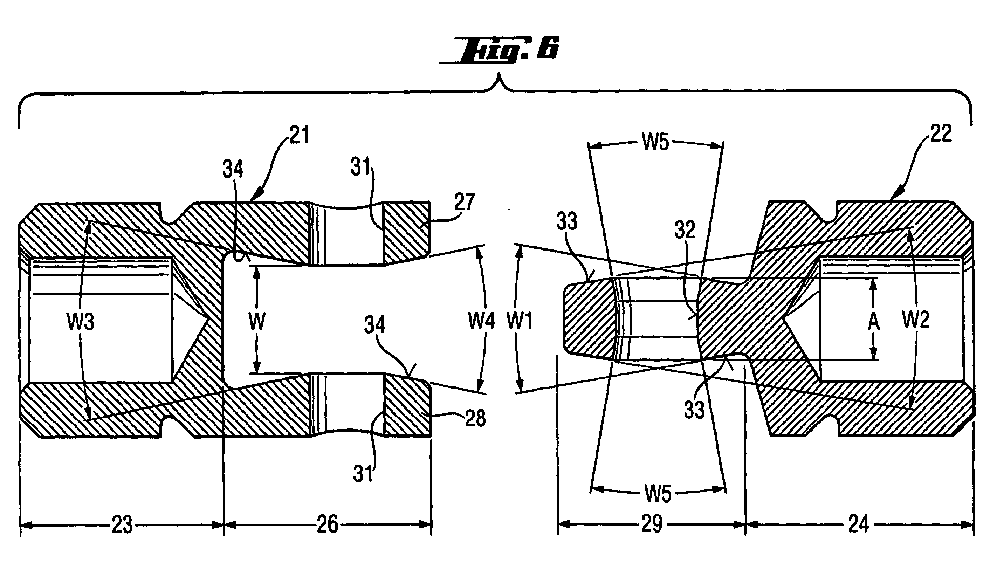

Die Fig. 1 bis 6 offenbaren zwei verschiedene Gelenkverschlüsse für Sägeseile 5, 25. Jeder der beiden Gelenkverschlüsse weist zwei Gelenkteile 1, 2, 21, 22 auf, die mit Hilfe eines Gelenkbolzens 10, 30 schwenkbar miteinander verbindbar sind.

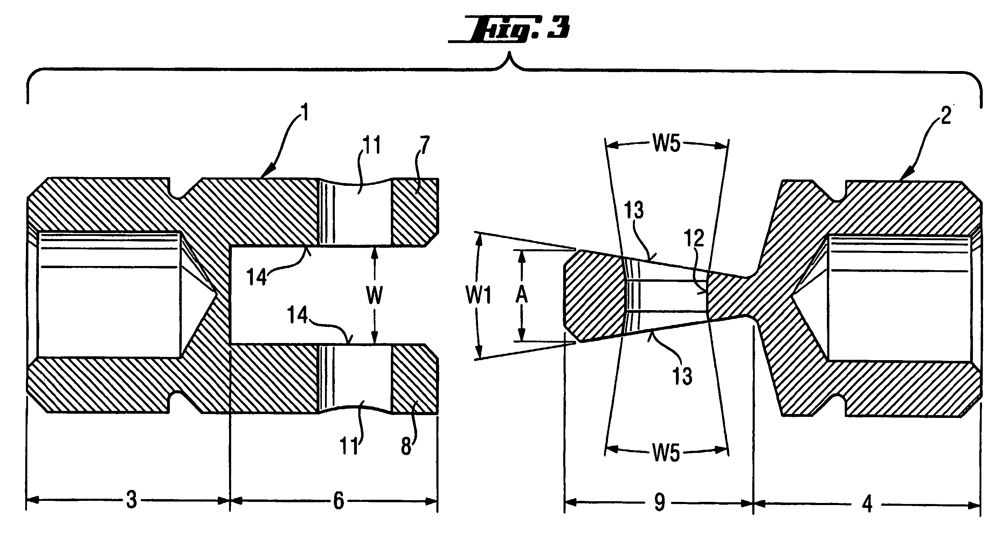

Ein erstes Gelenkteil 1, 21 beider Gelenkverschlüsse weist an einem ersten freien Endbereich einen Aufnahmebereich 3, 23 mit einer Aufnahmebuchse auf, die der Aufnahme eines ersten freien Endes des Sägeseiles 5, 25 dient. An einem der Aufnahmebuchse gegenüberliegenden, zweiten Endbereich ist das erste Gelenkteil 1, 21 mit einem gabelartig ausgebildeten Bereich 6, 26 versehen und weist zwei voneinander beabstandete Wangen 7, 8, 27, 28 auf. Wie insbesondere in den Fig. 3 und 6 dargestellt ist, werden beide Wangen 7, 8, 27, 28 von einer Bohrung 11, 31 durchsetzt, die der Aufnahme des in den Fig. 1, 2, 4 und 5 dargestellten Gelenkbolzens 10, 30 dient. Dieser Gelenkbolzen 10, 30 weist einen Durchmesser auf, der dem Durchmesser der Bohrung 11, 31 entspricht. Ein freier Endbereich dieses Gelenkbolzens ist beispielsweise mit einer nicht dargestellten Oberflächenprofilierung versehen, mit deren Hilfe besonders gute Haltewerte des Gelenkbolzens in der Bohrung 11, 31 erreicht werden.

Neben der Bohrung 11, 31 durchsetzt der Gelenkbolzen 10, 30 auch eine, in einem Verbindungsbereich 9, 29 eines zweiten Gelenkteiles 2, 22 angeordnete Durchtrittsöffnung 12, 32. Der Verbindungsbereich 9, 29 ist einstückig mit einem Aufnahmebereich 4 verbunden, der ebenfalls mit einer zum freien Ende des Aufnahmebereiches 4 hin offenen Sacklochbohrung versehen ist, die der Aufnahme eines weiteren freien Endes des Sägeseiles 5 dient. Die Festlegung der beiden Gelenksteile 1, 2, 21, 22 an dem Sägeseil 5, 25 erfolgt beispielsweise durch ein nicht dargestelltes radiales Verpressen der beiden Gelenkteile 1, 2, 21, 22 im Bereich der Aufnahmebuchse.

Im wesentlichen senkrecht zur Längsachse der Durchtrittsöffnung 12, 32 erstrecken sich zwei voneinander abgewandte Seitenflächen 13, 33 des Verbindungsbereiches 9, 29, die in einem Abstand A voneinander angeordnet sind. Eine, im wesentlichen einem grössten Abstand A der beiden Seitenflächen 13, 33 voneinander entsprechende, lichte Weite W erstreckt sich zwischen beiden Wangen 7, 8, 27, 28 des ersten Gelenkteiles 1, 21 und zwar in einer parallel zur Längsachse der Bohrung 11, 31 verlaufenden Richtung.

Der zentrale Bereich der Durchtrittsöffnung 12, 32 in dem Verbindungsbereich 9, 29 weist beispielsweise einen Durchmesser auf, der im wesentlichen dem Durchmesser des Gelenkbolzens 10, 30 entspricht. Ausserdem erweitert sich beispielsweise der Durchmesser der Durchtrittsöffnung 12, 32 zu beiden Seitenflächen 13, 33 hin unter einem Winkel W5 von 15°.

Bei dem in den Fig. 1 bis 3 dargestellten Gelenkverschluss sind von den Wangen 7, 8 gebildete, einander zugewandte Wandflächen 14 parallel zueinander angeordnet. Der in die von den Wandflächen 14 begrenzte lichte Weite W des ersten Gelenkteiles 1 ragbare Verbindungsbereich 9 des zweiten Gelenkteiles 2 weist zwei Seitenflächen 13 auf, deren parallel zur Längsachse der Durchtrittsöffnung 12 erstreckender Abstand A voneinander sich zum Aufnahmebereich 4 des zweiten Gelenkteiles 2 hin verringert. Beide Seitenflächen 13 sind zueinander unter einem Winkel W1 von beispielsweise 5° bis 20°, vorzugsweise 15° angeordnet.

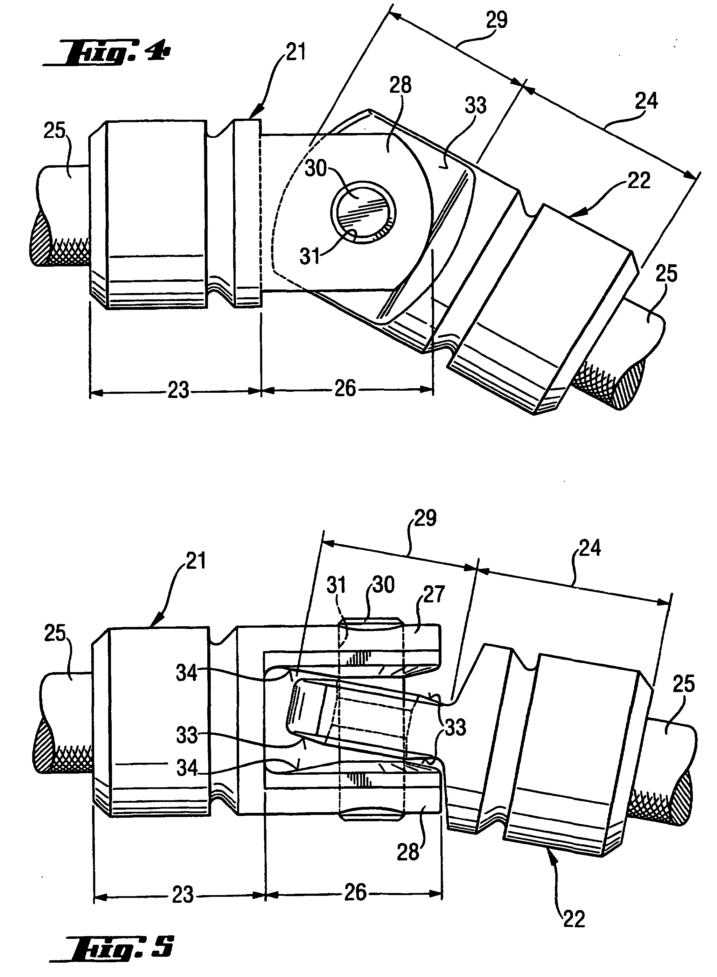

Das erste Gelenkteil 21 des in den Fig. 4 bis 6 dargestellten Gelenkverschlusses weist ebenfalls zwei Wangen 27, 28 mit jeweils einer Wandfläche 34 auf, die sich, voneinander beabstandet, gegenüberliegen. Zwischen beiden Wandflächen 34 erstreckt sich parallel zur Längsachse der Bohrung 31 eine lichte Weite W, die sich beispielsweise ausgehend von einem Zentrum der Bohrung 31, sowohl zum Aufnahmebereich 23, als auch zum freien Ende des gabelartig ausgebildeten Bereiches 26 hin vergrössert. Dadurch ergibt sich eine kleinste lichte Weite W zwischen den Wandflächen 34 im Bereich der Bohrung 31. Einzelne Abschnitte der Wandfläche 34, sind zueinander unter einem Winkel W4 von 5° bis 20°, vorzugsweise 15° angeordnet.

Der in die lichte Weite W des ersten Gelenkteiles 21 ragbare Verbindungsbereich 29 des zweiten Gelenkteiles 22 weist zwei Seitenflächen 33 auf, die in einem parallel zur Längsachse der Durchtrittsöffnung 32 erstreckenden Abstand A voneinander angeordnet sind. Ausgehend von einem Zentrum der Durchtrittsöffnung 32 verringert sich der Abstand A sowohl zum Aufnahmebereich 24 des zweiten Gelenkteiles 22 als auch zum freien Ende des Verbindungsbereiches 29 hin. Daraus ergibt sich ein grösster Abstand A im Bereich der Durchtrittsöffnung 32 und einzelne Abschnitte der Seitenflächen 33, sind zueinander unter einem Winkel von 5° bis 20°, vorzugsweise 15° angeordnet.

Der Abstand A der beiden Seitenflächen 13, 33 voneinander, kann beispielsweise, ausgehend vom Zentrum der Durchtrittsöffnung 12, 32, in einer senkrecht zu den Längsachsen der Durchtrittsöffnung 12, 32 und des Aufnahmebereiches 4, 24 verlaufenden Richtung zur Aussenkontur des zweiten Gelenkteiles 2, 22 hin abnehmen. Dies ermöglicht ein leichtes, gegenseitiges Verdrehen der beiden Gelenkteile 1, 2, 21, 22 um deren Längsachsen.

Die lichte Weite W zwischen den beiden Wandflächen 14, 34 der beiden Wangen 7, 8, 27, 28 kann sich beispielsweise ausgehend von einem Zentrum der Bohrung 11, 32, in einer senkrecht zu den Längsachsen der Bohrung 11, 32 und des Aufnahmebereiches 6, 26 verlaufenden Richtung zur Aussenkontur des ersten Gelenkteiles 1, 21 hin vergrössern. Auch diese besondere Ausgestaltung der Wandflächen 14, 34 ermöglicht ein leichtes, gegenseitiges Verdrehen der beiden Gelenkteile 1, 2, 21, 22 um deren Längsachsen.

Grundsätzlich ist es nicht notwendig, dass beide Gelenkteile 1, 2, 21, 22 über die spezielle Formgebung der Seitenflächen 13, 33 und der Wandflächen 14, 34 wie in den Fig. 4, 5 und 6 verfügen. Es reicht vollkommen aus, wenn nur eines der beiden Gelenkteile 1, 2, 21, 22 diese spezielle Formgebung aufweist und die Seitenflächen 13, 33 bzw. die Wandflächen 14, 34 des anderen Gelenkteiles 1, 2, 21, 22 parallel zueinander verlaufen, so dass zwischen den Wangen 7, 8, 27, 28 eine einheitliche lichte Weite W besteht oder der Abstand A zwischen den Seitenflächen 13, 33 konstant ist.

## Patentansprüche

1. Gelenkverschluss für ein Sägeseil (5), mit zwei Gelenkteilen (1, 2, 21, 22), die der Aufnahme der Enden des Sägeseiles (5) dienende Aufnahmebuchsen aufweisen, wobei ein erstes Gelenkteil (1, 21) mit einem gabelartig ausgebildeten Bereich (6, 26) versehen ist und zwei Wangen (7, 8, 27, 28) mit zwei einander gegenüberliegenden Wandflächen (14, 34) aufweist, zwischen die ein mit einem zweiten Gelenkteil (2, 22) in Verbindung stehender Verbindungsbereich (9, 29) mit zwei voneinander abgewandten Seitenflächen (13, 33) ragt, der um einen Gelenkbolzen (10, 30) schwenkbar ist, der in einer die beiden Wangen (7, 8, 27, 28) durchsetzenden Bohrung (11, 31) gelagert ist und eine Durchtrittsöffnung (12, 32) des Verbindungsbereiches (9, 29) durchsetzt, **dadurch gekennzeichnet, dass** der Verbindungsbereich (9, 29) von einem ösenförmigen Teil des zweiten Gelenkteiles (2, 22) gebildet ist und **dass** die Durchtrittsöffnung (12, 32) wenigstens im Bereich der beiden Seitenflächen (13, 33) einen den Durchmesser des Gelenkbolzens (10, 30) übersteigenden Durchmesser aufweist, wobei das zweite Gelenkteil (2, 22) gegenüber dem Gelenkbolzen (10, 30) des ersten Gelenkteils (1, 21) in einer zweiten Ebene verschwenkbar ist, die in der Längsachse des Gelenkbolzens (10, 30) liegt.

2. Gelenkverschluss nach Anspruch 1, **dadurch gekennzeichnet, dass** sich ein parallel zur Längsachse der Durchtrittsöffnung (12, 32) erstreckender Abstand (A) der beiden Seitenflächen (13, 33) voneinander zu einem Aufnahmebereich (4, 24) des zweiten Gelenkteiles (2, 22) und/oder zum freien Ende des Verbindungsbereiches (29) hin verringert, wobei der grösste Abstand (A) im wesentlichen einer sich zwischen den Wandflächen (14, 34) des ersten Gelenkteiles (1, 21) erstreckenden, lichten Weite (W) entspricht.

3. Gelenkverschluss nach Anspruch 2, **dadurch gekennzeichnet, dass** die Seitenflächen (13, 33) oder Abschnitte der Seitenflächen (13, 33) zueinander unter einem Winkel (W1, W2) von 5° bis 15° angeordnet sind.

4. Gelenkverschluss nach Anspruch 2 oder 3, **dadurch gekennzeichnet, dass** der Abstand (A) der beiden Seitenflächen (13, 33) voneinander in einer senkrecht zu den Längsachsen der Durchtrittsöffnung (12, 32) und des Aufnahmebereiches (4, 24) verlaufenden Richtung zur Aussenkontur des zweiten Gelenkteiles (2, 22) hin abnimmt.

5. Gelenkverschluss nach einem der Ansprüche 1 bis 4, **dadurch gekennzeichnet, dass** sich die lichte Weite (W) zwischen den Wandflächen (34) der beiden Wangen (27, 28) zu einem Aufnahmebereich (23) des ersten Gelenkteiles (21) und/oder zum freien Ende des gabelartig ausgebildeten Bereiches (26) hin vergrössert.

6. Gelenkverschluss nach Anspruch 5, **dadurch gekennzeichnet, dass** die Wandflächen (34) oder Abschnitte der Wandflächen (34) zueinander unter einem Winkel (W3, W4) von 5° bis 20° angeordnet sind.

7. Gelenkverschluss nach einem der Ansprüche 1 bis 6, **dadurch gekennzeichnet, dass** sich die lichte Weite (W) zwischen den beiden Wandflächen (14, 34) der beiden Wangen (7, 8, 27, 28) in einer senkrecht zu den Längsachsen der Bohrung (11, 31) und des Aufnahmebereiches (3, 23) verlaufenden Richtung zur Aussenkontur des ersten Gelenkteiles (1, 21) hin vergrössert.

8. Gelenkverschluss nach einem der Ansprüche 1 bis 7, **dadurch gekennzeichnet, dass** sich ein Durchmesser der Durchtrittsöffnung (12, 32) zu beiden Seitenflächen (13, 33) hin vergrössert.

## Claims

1. Hinged fastener for a wire saw (5) with two articulated parts (1, 2, 21, 22), which have seating sockets used to accommodate the ends of a wire saw (5), in which a first articulated part (1, 21) is equipped with an area shaped like a fork (6, 26) and has two side pieces (7, 8, 27, 28) with two wall surfaces (14, 34) facing each other, between which a connecting area (9, 29) projects that is connected with a second articulated part (2, 22) with two lateral surfaces (13, 33) turned away from each other, which can pivot around an articulated pin (10, 30), which is seated in a drilled hole (11, 31) made in one of the two side pieces (7, 8, 27, 28) and passes through a passage aperture (12, 32) of the connecting area (9, 29), **characterised in that** the connecting area (9, 29) is formed by a lug-shaped part of the second articulated part (2, 22) and that the passage aperture (12, 32) has a diameter exceeding the diameter of the articulated pin (10, 30), at least in the area of the two lateral surfaces (13, 33), in which the second articulated part (2, 22) can pivot in relation to the articulated pin (10, 30) of the first articulated part (1, 21) in a second plane which is in the longitudinal axis of the articulated pin (10,30).

2. Hinged fastener in accordance with Claim 1, **characterised in that** a distance (A) extending parallel to the longitudinal axis of the passage aperture (12, 32) that decreases from between the two lateral areas (13, 33) to a seating area (4, 24) of the second articulated part (2, 22) and/or to the free end of the connecting area (29), in the course of which the greatest distance (A) essentially corresponds to an overall internal width (W) extending between the wall surfaces (14, 34) of the first articulated part (1, 21).

3. Hinged fastener in accordance with Claim 1, **characterised in that** the lateral areas (13, 33) or sections of the lateral area (13, 33) are arranged in relation to each other at an angle (W1, W2) of 5° to 15°.

4. Hinged fastener in accordance with Claim 2 or Claim 3, **characterised in that** the distance (A) between both lateral areas (13, 33) decreases in a direction perpendicular to the longitudinal axes of the passage aperture (12, 32) and the seating area (4, 24) to the outer contour of the second articulated part (2, 22).

5. Hinged fastener in accordance with one of Claims 1 to 4, **characterised in that** the overall internal width (W) between the wall surfaces (34) of both side pieces (27, 28) increases towards a seating area of the first articulated part (21) and/or towards the free end of the area shaped like a fork (26).

6. Hinged fastener in accordance with Claim 5, **characterised in that** the wall surfaces (34) or sections of the wall surfaces (34) are arranged in relation to each other at an angle (W3, W4) of 5° to 20°.

7. Hinged fastener in accordance with one of Claims 1 to 6, **characterised in that** the overall internal width (W) between the two wall surfaces (14, 34) of the two side pieces (7, 8, 27, 28) increases in a direction running perpendicular to the longitudinal axes of the drilled hole (11, 31) and of the seating area (3, 23) to the outer contour of the first articulated part (1, 21).

8. Hinged fastener in accordance with one of Claims 1 to 7, **characterised in that** the diameter of the passage aperture (12, 32) increases towards the two lateral areas (13,33).

## Revendications

1. Fermeture articulée pour un câble de scie (5), avec deux parties d'articulation (1, 2, 21, 22) qui comportent des douilles réceptrices servant à recevoir les extrémités du câble de scie (5), une première partie d'articulation (1, 21) étant pourvue d'une zone conformée en fourche (6, 26) et comportant deux joues (7, 8, 27, 28) avec deux surfaces de paroi en vis-à-vis (14, 34) entre lesquelles s'insère une zone de liaison (9, 29) qui est reliée à une seconde partie d'articulation (2, 22) et comporte deux surfaces latérales (13, 33) orientées à l'opposé l'une de l'autre et qui peut pivoter autour d'un axe d'articulation (10, 30), lequel est logé dans un trou (11, 31) traversant les deux joues (7, 8, 27, 28) et traverse une ouverture traversante (12, 32) de la zone de liaison (9, 29), **caractérisée en ce que** la zone de liaison (9, 29) est formée par une partie en forme d'oeillet de la seconde partie d'articulation (2, 22), et **en ce que** l'ouverture traversante (12, 32) présente, au moins dans la zone des deux surfaces latérales (13, 33), un diamètre supérieur au diamètre de l'axe d'articulation (10, 30), la seconde partie d'articulation (2, 22) pouvant pivoter par rapport à l'axe d'articulation (10, 30) de la première partie d'articulation (1, 21) dans un second plan qui se trouve sur l'axe longitudinal de l'axe d'articulation (10, 30).

2. Fermeture articulée selon la revendication 1, **caractérisée en ce que** l'écartement mutuel (A) des deux surfaces latérales (13, 33) s'étendant parallèlement à l'axe longitudinal de l'ouverture traversante (12, 32) diminue vers la zone réceptrice (4, 24) de la seconde partie d'articulation (2, 22) et/ou vers l'extrémité libre de la zone de liaison (29), l'écartement maximal (A) correspondant sensiblement à l'ouverture libre (W) s'étendant entre les surfaces de parois (14, 34) de la première partie d'articulation (1, 21).

3. Fermeture articulée selon la revendication 2, **caractérisée en ce que** les surfaces latérales (13, 33) ou des portions des surfaces latérales (13, 33) sont disposées l'une par rapport à l'autre selon un angle (W1, W2) de 5° à 15°.

4. Fermeture articulée selon la revendication 2 ou 3, **caractérisée en ce que** l'écartement mutuel (A) des deux surfaces latérales (13, 33) diminue vers le contour extérieur de la seconde partie d'articulation (2, 22) dans une direction perpendiculaire à l'axe longitudinal de l'ouverture traversante (12, 32) et à celui de la zone réceptrice (4, 24).

5. Fermeture articulée selon une des revendications 1 à 4, **caractérisée en ce que** l'ouverture libre (W) entre les surfaces de parois (34) des deux joues (27, 28) augmente vers une zone réceptrice (23) de la première partie d'articulation (21) et/ou vers l'extrémité libre de la zone conformée en fourche (26).

6. Fermeture articulée selon la revendication 5, **caractérisée en ce que** les surfaces de parois (34) ou des portions des surfaces de parois (34) sont disposées l'une par rapport à l'autre selon un angle (W3, W4) de 5° à 20°.

7. Fermeture articulée selon une des revendications 1 à 6, **caractérisée en ce que** l'ouverture libre (W) entre les deux surfaces de parois (14, 34) des deux joues (7, 8, 27, 28) augmente vers le contour extérieur de la première partie d'articulation (1, 21) dans une direction perpendiculaire à l'axe longitudinal du trou (11, 31) et à celui de la zone réceptrice (3, 23).

8. Fermeture articulée selon une des revendications 1 à 7, **caractérisée en ce que** le diamètre de l'ouverture traversante (12, 32) augmente vers les deux surfaces latérales (13, 33).
